(19) **Europäisches Patentamt / European Patent Office / Office européen des brevets**

(11) **EP 4 519 929 B1**

(12) **EUROPEAN PATENT SPECIFICATION**

(45) Date of publication and mention
of the grant of the patent:
**11.03.2026   Bulletin 2026/11**

(21) Application number: **23724759.8**

(22) Date of filing: **03.05.2023**

(51) International Patent Classification (IPC):
*H01M 10/0562* (2010.01)   *H01M 10/05* (2010.01)
*H01M 4/48* (2010.01)   *H01M 4/131* (2010.01)
*H01M 4/1391* (2010.01)   *H01G 11/02* (2013.01)
*H01G 11/46* (2013.01)   *H01G 11/56* (2013.01)

(52) Cooperative Patent Classification (CPC):
**H01M 10/0562; H01G 11/02; H01G 11/46;
H01G 11/56; H01M 4/131; H01M 4/1391;
H01M 4/483; H01M 10/05;** H01M 2300/0071;
Y02E 60/10

(86) International application number:
**PCT/EP2023/061717**

(87) International publication number:
**WO 2023/213905 (09.11.2023 Gazette 2023/45)**

(54) **SECONDARY CELLS**

SEKUNDÄRZELLEN

CELLULES SECONDAIRES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **03.05.2022  EP 22382423**

(43) Date of publication of application:
**12.03.2025   Bulletin 2025/11**

(73) Proprietor: **TECHNISCHE UNIVERSITÄT WIEN
1040 Wien (AT)**

(72) Inventors:
• **BAIUTTI, Federico
  08026 BARCELONA (ES)**
• **TARANCÓN RUBIO, Albert
  08031 BARCELONA (ES)**

• **MORATA GARCÍA, Alex
  08930 ST. ADRIÀ DE BESÒS (ES)**
• **FLEIG, Jürgen Norbert
  1080 VIENNA (AT)**
• **SCHMID, Alexander
  1120 WIEN (AT)**
• **KRAMMER, Martin
  3462 ABSDORF (AT)**

(74) Representative: **Schwarz & Partner Patentanwälte
GmbH
Patentanwälte
Wipplingerstraße 30
1010 Wien (AT)**

(56) References cited:
**WO-A1-2013/093044      US-A1- 2005 089 738
US-A1- 2020 227 779**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application claims the benefit of European Patent Application EP22382423.6 filed on May 3, 2022.

The present disclosure relates to secondary cells comprising a solid electrolyte.

## BACKGROUND

In recent years, secondary cells (also named rechargeable batteries) have become increasingly important e.g., in consumer electronics, automotive industry, and energy storage systems for portable applications. Particularly, a secondary cell is an electrochemical cell that produces an electric current. A secondary cell may be discharged and recharged a plurality of times contrary to primary cells.

Most common secondary cells are lithium-ion rechargeable batteries. A lithium-ion rechargeable battery is configured to generate electric energy through redox reactions occurring during lithium-ion intercalation / deintercalation in the positive electrode and the negative electrode. Current lithium-ion rechargeable batteries usually use lithium cobalt oxide ($LiCoO_2$) for the positive electrode, graphite for the negative electrode, a separator, and a liquid electrolyte made of lithium salt dissolved in an organic fluid. As a result, lithium-ion rechargeable batteries use intensively critical raw materials (e.g., lithium, cobalt) which present environmental and health hazards. In addition, liquid electrolytes of lithium-ion rechargeable batteries are flammable and sensitive to safety risks.

Another type of secondary cell is an all-solid-state lithium battery. All-solid-state lithium batteries use a solid electrolyte instead of a liquid electrolyte. Even though the solid electrolyte is non-flammable, all-solid-state lithium batteries still use intensively critical raw materials (i.e., lithium) which present environmental and health hazards.

Similarly, metal-air batteries are known. For example, a lithium-air battery typically comprises an electrolyte, a lithium-metal negative electrode, and a positive electrode that is in contact with ambient air. As a result, gas-solid reactions take place at the positive electrode. During discharge, lithium-ions flow from the negative electrode through the electrolyte to react with oxygen at the positive electrode to form a product such as lithium oxide $LiO_2$ or lithium peroxide $Li_2O_2$ which deposits at the positive electrode. However, conventional lithium-air batteries have poor cyclability and still use intensively critical raw materials (i.e., lithium) which present environmental and health hazards.

WO 2013/093044 A1 describes a metal-air battery that works at high temperatures, said battery comprising a metal electrode, an air electrode comprising a mixed electron and oxygen ion conductor, and a solid oxide electrolyte.

US 2020/227779 A1, and US 2005/089738 A1 relate to secondary cells.

Furthermore, there are secondary cells that are not based on lithium-ion intercalation/deintercalation in the positive electrode and the negative electrode for generating electric energy. However, in these secondary cells, the operating temperature of the secondary cell is above 500°C (and up to 1000°C). Furthermore, these secondary cells may use liquid electrolytes to provide ion conduction. Operating temperatures above 500°C are not suitable for e.g., consumer electronics, automotive industry, and energy storage systems for portable applications. Under such extreme conditions, secondary cell elements may be subject to corrosion. Therefore, these secondary cells may be sensitive to vibration or motion, limiting these secondary cells for stationary applications.

Examples of the present disclosure seek to at least partially reduce one or more of the aforementioned problems.

## SUMMARY

In a first aspect, a secondary cell is provided. The secondary cell comprises a solid electrolyte to conduct oxygen ions, a positive electrode configured to be in contact with the solid electrolyte, and a negative electrode configured to be in contact with the solid electrolyte. The positive and the negative electrode comprise a mixed ionic and electronic structure for conducting oxygen ions and electrons. The mixed ionic and electronic structure comprises an $ABO_3$ structure, wherein the A site corresponds to a first chemical element with a first covalent radius, wherein the B site corresponds to a second chemical element with a second covalent radius; and / or a $CeMO_2$ structure, wherein the Ce is Cerium and M is a metal.

In this aspect, a secondary cell based on oxygen ions conduction is provided. During discharge or charge, oxygen ions may be exchanged between the positive electrode and the negative electrode. As a result, a lithium-free secondary cell is provided. Therefore, the secondary cell may use less critical raw materials (i.e., lithium) which present environmental and health hazards.

In addition, the secondary cell may have increased safety because the secondary cell comprises a solid electrolyte to conduct oxygen ions. As a result, the solid electrolyte may not be subject to decomposition and gas generation, e.g., air, $O_2$ gas, flammable gases.

Contrary to gas-solid reactions with a slow rate and high-temperature dependency, oxygen ions may be extracted from the $ABO_3$ structure and / or $CeMO_2$ structure. As a result, conduction of oxygen ions may be achieved at low temperatures (i.e., below 400°C). Extracted oxygen ions may be conducted through the solid electrolyte into the $ABO_3$ structure and / or $CeMO_2$ structure. Therefore, selecting a solid electrolyte to conduct oxygen ions and an $ABO_3$

structure and / or a $CeMO_2$ structure as electrodes may achieve an operating temperature below 400°C, specifically between room temperature and 400°C, and more specifically between 150°C and 300°C.

Particularly, the $ABO_3$ structure may comprise a cubic crystal structure (i.e., space group Pm3m) where the first chemical element (i.e., A site) may be located at the corners of the cubic crystal structure, e.g., (0,0,0); the second chemical element (i.e., B site) may be located at the body center of the cubic crystal structure, e.g., (½, ½, ½); and the oxygen ions may be located at the face-centered positions of the cubic crystal structure, e.g., (½, ½, 0), (½, 0, ½) and (0, ½, ½). Hence, the second chemical element (i.e., B site) may be surrounded octahedrally by oxygen ions.

Additional $ABO_3$ structures may be obtained where the first chemical element (i.e., A site) and / or the second chemical element (i.e., B site) may comprise a configuration of $A1_{x-1}A2_x$ and / or $B1_{y-1}B2_y$. As a result, the $ABO_3$ structure may deviate from the cubic crystal structure because the first chemical element (i.e., A site) and / or the second chemical element (i.e., B site) may undergo changes in their oxidation states. In addition, depending on temperature, the $ABO_3$ structure may comprise other crystal structures, e.g., orthorhombic, tetragonal, or trigonal.

The $ABO_3$ structure may allow oxygen ions present in the $ABO_3$ structure to be efficiently extracted or inserted as a mobile ion. Therefore, oxygen ions may be conducted within the positive electrode or the negative electrode during the charge and / or discharge of the secondary cell at a low temperature (i.e., below 400°C).

In some examples of the $ABO_3$ structure, the first covalent radius of the first chemical element (i.e., A site) may be above the second covalent radius of the second chemical element (i.e., B site).

Particularly, the A site may be selected from at least one of the following: Lanthanum La, Calcium Ca, Strontium Sr, Barium Ba.

Moreover, the B site may be selected from at least one of the following: Manganese Mn, Chromium Cr, Iron Fe, Nickel Ni, Cobalt Co, Titanium Ti.

In some examples, the stoichiometry of the $ABO_3$ structure may be $ABO_{3-\delta}$, wherein $\delta$ is between -1 and 1.

In some examples, a plurality of structures may be obtained from the $ABO_3$ structure such as Ruddlesden-Popper structures: $A_{n+1}B_nO_{3n+1}$ with n = 1, 2, 3. The $A_{n+1}B_nO_{3n+1}$ structure may comprise n $ABO_3$ structure layers sandwiched between AO rock-salt layers. Therefore, the $A_{n+1}B_nO_{3n+1}$ structure may be a derived structure from the $ABO_3$ structure. The $A_{n+1}B_nO_{3n+1}$ structure may comprise an $A_2BO_4$ structure (n=1), and / or an $A_3B_2O_7$ structure (n=2), and / or an $A_4B_3O_{10}$ structure (n=3).

Referring to the $CeMO_2$ structure, in some examples, the metal M of the $CeMO_2$ structure may be selected from at least one of the following: Gadolinium Gd, Samarium Sm, Lanthanum La, Calcium Ca, Magnesium Mg, Praseodymium Pr, Zirconium Zr.

Therefore, the $CeMO_2$ structure may present oxygen vacancies because of the introduction of the metal M. As a result, the $CeMO_2$ structure may allow oxygen ions present in the $CeMO_2$ structure to be efficiently extracted or inserted as a mobile ion at low temperatures (i.e., below 400°C).

In both cases, the $ABO_3$ structure and the $CeMO_2$ structure may exhibit ionic conduction (i.e., oxygen ion conductivity) and electronic conduction (i.e., electrical conductivity).

In the $ABO_3$ structure, the first chemical element (i.e., A site) and / or the second chemical element (i.e., B site) do not comprise the chemical element: lithium Li.

Similarly, in the $A_{n+1}B_nO_{3n+1}$ structure, the first chemical element (i.e., A site) and / or the second chemical element (i.e., B site) do not comprise the chemical element: lithium Li.

Similarly, in the $CeMO_2$ structure, the metal M does not comprise the chemical element: lithium Li.

In some examples, the mixed ionic and electronic structure of the positive electrode and / or the negative electrode may comprise a thickness between 1 nm and 1 mm, specifically between 100 nm and 1 μm.

In addition, in some examples, the solid electrolyte may be doped $ZrO_2$ or doped $CeO_2$. In some of these examples, the doped $ZrO_2$ and / or the doped $CeO_2$ may comprise a dopant selected from at least one of the following: Gadolinium Gd, Samarium Sm, Scandium Sc, Lanthanum La, Calcium Ca, Magnesium Mg, Yttrium Y. Therefore, adding aliovalent cations to $ZrO_2$ or $CeO_2$ may give rise to oxygen vacancies, which may provide a pathway for conducting oxygen ions.

In some examples, the solid electrolyte may comprise a thickness between 1 nm and 1 mm, specifically between 100 nm and 1 μm.

Furthermore, in some examples, the secondary cell may further comprise a current collector. In these examples, the current collector may be configured to be in contact with the positive electrode for collecting a charge from the positive electrode; or the negative electrode for collecting a charge from the negative electrode. Particularly, the current collector may be a metal.

In addition, in some examples, the secondary cell may further comprise an insulating layer, such as an electronically insulating layer, arranged on at least one of the electrodes. For example, the insulating layer or the electronically insulating layer may be configured to be in contact with at least one of the electrodes.

In some examples, the insulating layer or the electronically insulating layer may be configured to be in contact with the current collector.

In both cases, the insulating layer or the electronically insulating layer may be able to avoid oxygen leaks (i.e., there is no oxygen exchange with the atmosphere of at least one of the electrodes on which the insulating layer is arranged) and / or prevent the flow of electrical current on its surface. As a result, the insulating layer or the electronically insulating layer may prevent self-discharge of the secondary cell (e.g., no oxygen leaks because the insulating layer arranged on at least one of the electrodes, isolates the at least one of the electrodes from the atmosphere or the outside) and / or the flow of leakage current from the current collector. In some of these examples, the insulating layer or the electronically insulating layer may be made of zirconia dioxide $ZrO_2$ or alumina $Al_2O_3$.

In some examples, the insulating layer or the electronically insulating layer may comprise a thickness between 1 nm and 1 mm.

It may be noted that the examples comprising an insulating layer or an electronically insulating layer arranged on at least one of the electrodes, may include examples in which the insulating layer or the electronically insulating layer are arranged on each electrode. Therefore, both electrodes may be in contact with an insulating layer or an electronically insulating layer.

The term "oxygen" may be used to refer to any allotrope of oxygen, e.g., $O_1$, $O_2$, $O_3$. Thus, the term "oxygen ions" may be used to refer to any ion of any allotrope of oxygen, e.g., $O^-$, $O^{2-}$.

The term "metal" may be used to refer to metals, alkali earth metals, Lanthanides, and transition metals of the periodic table of elements.

The term "temperature" may be used to refer to an operating temperature of the secondary cell. In addition, room temperature may be used to refer to a temperature between 15°C and 27°C. For example, in the present disclosure, the room temperature may be 20°C.

The term "low temperature" may refer to temperatures below 400°C whereas the term "high temperature" may refer to temperatures above 500°C.

The term "structure" may be understood as a spatial pattern along 3 different directions (i.e., x, y, z) of a three-dimensional space which may be any suitable spatial arrangement such as, for example, a layer, a wafer, a cube, a cone, a cylinder, a disk, a hexagonal prism, a triangular prism, a pentagonal prism, a tetrahedron, an octahedron, a sphere and any combinations thereof.

The term "mol percent" may be used to refer to a molar percentage of a first component (e.g., $Y_2O_3$) relative to total mols of a second component (e.g., $ZrO_2$).

In summary, a secondary cell that is lithium free and that may be operated at low temperatures is provided.

## BRIEF DESCRIPTION OF THE DRAWINGS

Non-limiting examples of the present disclosure will be described in the following, with reference to the appended drawings, in which:

Figure 1 is a schematic view of a secondary cell according to one example of the present disclosure;

Figure 2 is a schematic view of a secondary cell according to one example of the present disclosure;

Figure 3 illustrates the operation of a secondary cell during discharge according to one example of the present disclosure;

Figures 4 illustrates a plurality of curves of a secondary cell at temperatures between 373 K and 673 K as a function of power density, energy density, and electrode thickness according to one example of the present disclosure;

Figure 5 illustrates a plurality of charging curves and a plurality of discharging curves of a secondary cell according to one example of the present disclosure;

Figure 6 illustrates a flow chart for forming a secondary cell according to one example of the present disclosure.

## DETAILED DESCRIPTION OF EXAMPLES

In these figures, the same reference signs have been used to designate matching elements.

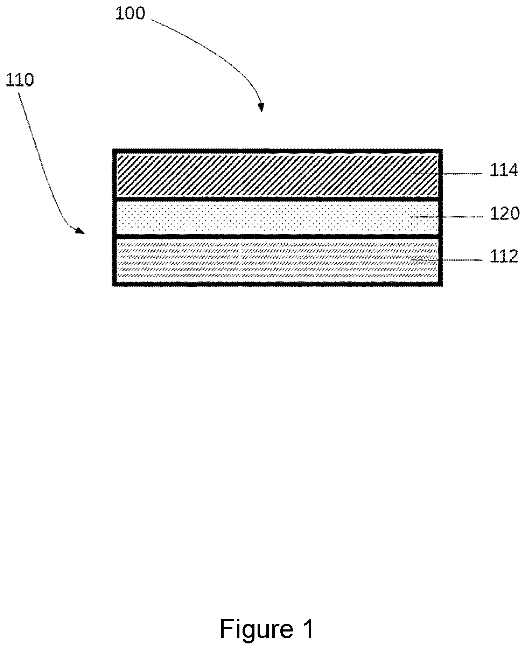

Figure 1 illustrates a schematic view of one example of a secondary cell 100. The secondary cell 100 is an electrochemical cell where redox reactions may take place at the electrodes 110. Hence, the secondary cell 100 generates electrical energy from chemical reactions. The secondary cell 100 comprises a positive electrode 112, a negative electrode 114 and a solid electrolyte 120.

The positive electrode 112 and the negative electrode 114 comprise a mixed ionic and electronic structure for conducting oxygen ions and electrons. Mixed ionic and electronic structures provide ionic conductivity to conduct ions and electronic conductivity to conduct electrons. Particularly, the mixed ionic and electronic structure comprises an $ABO_3$ structure, and / or a $CeMO_2$ structure. In addition, the mixed ionic and electronic structure may comprise an $A_{n+1}B_nO_{3n+1}$ structure.

In the $ABO_3$ structure, the A site corresponds to a first chemical element with a first covalent radius, and the B site corresponds to a second chemical element with a second covalent radius.

The $ABO_3$ structure may comprise a cubic crystal structure (i.e., space group Pm3m) where the first chemical element (i.e., A site) may be located at the corners of the cubic crystal structure, e.g., (0,0,0); the second chemical element (i.e., B site) may be located at the body center of the cubic crystal structure, e.g., (½, ½, ½); and the oxygen ions may be located at the face-centered positions of the cubic crystal structure, e.g., (½, ½, 0), (½, 0, ½) and (0, ½, ½).

Additional $ABO_3$ structures may be obtained where the first chemical element (i.e., A site) and / or the second chemical element (i.e., B site) may comprise a configuration of $A1_{x-1}A2_x$ and / or $B1_{y-1}B2_y$. As a result, the $ABO_3$ structure may deviate from the cubic crystal structure because the first chemical element (i.e., A site) and / or the second chemical element (i.e., B site) may undergo changes in their oxidation states. In addition, depending on temperature, the $ABO_3$ structure may comprise other crystal structures, e.g., orthorhombic, tetragonal, or trigonal.

In some examples, the first covalent radius of the first chemical element (i.e., A site) may be above the second covalent radius of the second chemical element (i.e., B site).

Particularly, in these examples, the first chemical element may be selected from at least one of the following: Lanthanum La, Calcium Ca, Strontium Sr, Barium Ba (see Table 1).

In addition, in some examples, the second chemical element may be selected from at least one of the following: Manganese Mn, Chromium Cr, Iron Fe, Nickel Ni, Cobalt Co Titanium Ti (see Table 1).

As shown in Table 1, the first chemical elements (i.e., A site) have a first covalent radius above (or greater than) the second covalent radius of the second chemical elements (i.e., B site). Depending on the molecular geometry (e.g., square planar, tetrahedral, octahedral) of the first chemical elements and / or the second chemical elements, the first chemical elements and / or the second chemical elements may have different covalent radii. Particularly, the first chemical elements and / or the second chemical elements may have a covalent radius depending on the spin state (i.e., high spin or low spin).

For example, the first covalent radius (i.e., 207 pm) of lanthanum chemical element (i.e., A site) is above (or greater than) the second covalent radius (i.e., 139 pm) of chromium chemical element (i.e., B site). Similarly, the first covalent radius (i.e., 195 pm) of strontium chemical element (i.e., A site) is above (or greater than) the second covalent radius (i.e., 139 pm) of chromium chemical element (i.e., B site).

It may be noted that the covalent radius parameters described in table 1 are parameters that may be retrieved from the article: Cordero, B. /et al./ Covalent radii revisited. radii revisited./Dalton Trans/ 2832-2838 (2008) doi:10.1039/B801115J.

### Table 1.

| $ABO_3$ structure | | Covalent radius (pm) | |
|---|---|---|---|
| *A site* | Ca | 176 | |
| | Sr | 195 | |
| | La | 207 | |
| | Ba | 215 | |
| *B site* | Ni | 124 | |
| | Co | low spin: 126 | high spin: 150 |
| | Fe | low spin: 132 | high spin: 152 |
| | Cr | 139 | |
| | Mn | low spin: 139 | high spin: 161 |
| | Ti | 160 | |

In some examples, the stoichiometry of the $ABO_3$ structure is $ABO_{3-\delta}$, wherein $\delta$ is between -1 and 1.

Therefore, the $ABO_3$ structure may thus be configured to comprise oxygen vacancies to conduct oxygen ions while the $ABO_3$ structure may be configured to provide electronic conduction to conduct electrons. As a result, oxygen ions may be extracted or inserted into the $ABO_3$ structure. Thus, oxygen ions may be used as a movable ion. Therefore, oxygen ions may be extracted or inserted into the positive electrode 112 or into the negative electrode 114 during the charge and / or discharge of the secondary cell 100 at a low temperature, i.e., below 400°C, specifically between room temperature and 400°C, and more specifically between 150°C and 300°C.

Additional $ABO_3$ structures may be obtained wherein the first chemical element (i.e., A site) and / or the second chemical element (i.e., B site) may comprise a configuration of $A1_{x-1}A2_x$ and / or $B1_{y-1}B2_y$. As a result, the $ABO_3$ structure may deviate from the cubic crystal structure because the first chemical element (i.e., A site) and / or the second chemical element (i.e., B site) may undergo changes in their oxidation states. In addition, depending on temperature, the $ABO_3$ structure may comprise other crystal structures, e.g., orthorhombic, tetragonal, or trigonal.

It may be noted that a plurality of structures may be obtained from the $ABO_3$ structure such as Ruddlesden-Popper structures: $A_{n+1}B_nO_{3n+1}$ with n = 1, 2, 3. The $A_{n+1}B_nO_{3n+1}$ structure may comprise n $ABO_3$ structure layers sandwiched between AO rock-salt layers. Therefore, the $A_{n+1}B_nO_{3n+1}$ structure may be a derived structure from the $ABO_3$ structure. The $A_{n+1}B_nO_{3n+1}$ structure may comprise an $A_2BO_4$ structure (n=1), and / or an $A_3B_2O_7$ structure (n=2), and / or an $A_4B_3O_{10}$ structure (n=3).

For example, the positive electrode 112 and / or the negative electrode 114 may comprise an $A_2BO_4$ structure. In the $A_2BO_4$ structure, the A site corresponds to a first chemical element with a first covalent radius, and the B site corresponds to a second chemical element with a second covalent radius.

In some examples, the first covalent radius of the first chemical element (i.e., A site) may be above the second covalent radius of the second chemical element (i.e., B site).

Particularly, in these examples, the first chemical element may be selected from at least one of the following: Lanthanum La, Calcium Ca, Strontium Sr, Barium Ba (see Table 1).

In some examples, the first chemical element may be further selected from Praseodymium Pr, Neodymium Nd.

In addition, in some examples, the second chemical element may be selected from at least one of the following: Manganese Mn, Chromium Cr, Iron Fe, Nickel Ni, Cobalt Co Titanium Ti (see Table 1).

In some examples, the second chemical element may be Copper Cu.

In some examples, the stoichiometry of the $A_2BO_4$ structure is $A_2BO_{4-\delta}$, wherein $\delta$ is between -1 and 1.

Therefore, the $A_2BO_4$ structure may thus be configured to comprise oxygen vacancies or oxygen interstitials to conduct oxygen ions while the $A_2BO_4$ structure may be configured to provide electronic conduction to conduct electrons. As a result, oxygen ions may be extracted or inserted into the $A_2BO_4$ structure. Thus, oxygen ions may be used as a movable ion. Therefore, oxygen ions may be extracted or inserted into the positive electrode 112 or into the negative electrode 114 during the charge and / or discharge of the secondary cell 100 at a low temperature, i.e., below 400°C, specifically between room temperature and 400°C, and more specifically between 150°C and 300°C.

As hereinbefore mentioned, the positive electrode 112 and / or the negative electrode 114 may comprise a $CeMO_2$ structure. In the $CeMO_2$ structure, the Ce is Cerium and M is a metal.

In some examples, the metal M of the $CeMO_2$ structure may be selected from at least one of the following: Gadolinium Gd, Samarium Sm, Lanthanum La, Calcium Ca, Magnesium Mg, Praseodymium Pr, Zirconium Zr.

Therefore, the $CeMO_2$ structure may thus be configured to comprise oxygen vacancies because of the introduction of the metal M.

In some examples, the stoichiometry of the $CeMO_2$ structure is $Ce_{1-x}M_xO_{2-\delta}$, wherein x is between 0 and 1 and $\delta$ is between -1 and 1.

In the $CeMO_2$ structure, metal cations may substitute cerium ions in the crystal structure of the $CeMO_2$ structure. As a result, defects may arise in the crystal structure, specifically oxygen vacancies. Increasing the substitution of cerium ions with metal cations having a lower valence than cerium chemical element (e.g., replacing $Ce^{4+}$ with $La^{3+}$), may increase the ionic conductivity of the $CeMO_2$ structure.

Therefore, the $CeMO_2$ structure may thus be configured to comprise oxygen vacancies to conduct oxygen ions while the $CeMO_2$ structure may be configured to provide electronic conduction to conduct electrons. As a result, oxygen ions may be extracted or inserted into the $CeMO_2$ structure. Thus, oxygen ions may be used as a movable ion. Therefore, oxygen ions may be extracted or inserted into the positive electrode 112 or into the negative electrode 114 during the charge and / or discharge of the secondary cell 100 at a low temperature, i.e., below 400°C, specifically between room temperature and 400°C, and more specifically between 150°C and 300°C.

In some examples, the mixed ionic and electronic structure of the positive electrode 112 may be a different structure than the mixed ionic and electronic structure of the negative electrode 114. For example, the positive electrode 112 may be formed of the $ABO_3$ structure while the negative electrode 114 may be formed of the $CeMO_2$ structure; or may be formed of the $A_{n+1}B_nO_{3n+1}$ structure and specifically the $A_2BO_4$ structure (n=1).

In some examples, the mixed ionic and electronic structure of the positive electrode 112 may be the same structure as the mixed ionic and electronic structure of the negative electrode 114. For example, the positive electrode 112 and the negative electrode 114 may be both formed of the $ABO_3$ structure; or may be both formed of the $CeMO_2$ structure; or may be both formed of the $A_{n+1}B_nO_{3n+1}$ structure and specifically the $A_2BO_4$ structure (n=1).

In addition, the mixed ionic and electronic structure of the positive electrode 112 and / or the negative electrode 114 may comprise a thickness between 1 nm and 1 mm, specifically between 100 nm and 1 $\mu$m.

In some examples, the electrodes 110 comprising the positive electrode 112 and the negative electrode 114 may be deposited via conventional synthesis and deposition methods such as physical vapor deposition (PVD) e.g. cathodic arc deposition, electron-beam physical vapor deposition, close-space sublimation, pulsed laser deposition; thermal evaporation; electron-beam evaporation; sputtering, for example, diode sputtering, RF diode sputtering, triode sputtering, magnetron sputtering, reactive sputtering, or ion-beam sputtering; ion-assisted deposition; chemical vapor deposition (CVD); sol-gel coatings; or atomic layer deposition (ALD).

Referring to Figure 1, the positive electrode 112 is configured to be in contact with the solid electrolyte 120. In addition, the negative electrode 114 is configured to be in contact with the solid electrolyte 120.

The solid electrolyte 120 may provide ionic conduction (i.e., with an ionic conductivity $\sigma$ above $10^{-6}$ S/m) to conduct oxygen ions while the solid electrolyte 120 may be an electronic insulator (i.e., with a conductivity $\sigma$ below $10^{-4}$ S/m). Particularly, the solid electrolyte 120 to conduct oxygen ions may comprise doped $ZrO_2$ or doped $CeO_2$.

In some examples, the doped $ZrO_2$ and / or the doped $CeO_2$ may comprise a dopant selected from at least one of the following: Gadolinium Gd, Samarium Sm, Scandium Sc, Lanthanum La, Calcium Ca, Magnesium Mg, Yttrium Y.

Adding aliovalent dopants (i.e., dopants with a different valence than zirconium and / or cerium) to $ZrO_2$ and / or $CeO_2$ may generate oxygen vacancies in the crystal structure of the doped $ZrO_2$ and / or the doped $CeO_2$. These oxygen vacancies may provide ionic conductivity for conducting oxygen ions.

The solid electrolyte and the mixed ionic and electronic structure may be selected to achieve an operating temperature below 400°C, specifically between room temperature and 400°C, and more specifically between 150°C and 300°C.

In some examples, the solid electrolyte 120 may comprise a thickness between 1 nm and 1 mm, specifically between 100 nm and 1 $\mu$m.

In some examples, the solid electrolyte 120 may be deposited via conventional synthesis and deposition methods such as physical vapor deposition (PVD) e.g. cathodic arc deposition, electron-beam physical vapor deposition, close-space sublimation, pulsed laser deposition; thermal evaporation; electron-beam evaporation; sputtering, for example, diode sputtering, RF diode sputtering, triode sputtering, magnetron sputtering, reactive sputtering, or ion-beam sputtering; ion-assisted deposition; chemical vapor deposition (CVD); sol-gel coatings; or atomic layer deposition (ALD).

In some examples, the secondary cell 100 may further comprise a current collector. Particularly, the current collector may be a conductor (conductivity $\sigma$ above $10^1$ S/m). In addition, the current collector may be configured to be in contact with: the positive electrode 112 for collecting a charge (e.g., an electron) from the positive electrode 112; or the negative electrode 114 for collecting a charge (e.g., an electron) from the negative electrode 114. Therefore, the current collector may collect a charge from at least one of the electrodes 110.

In these examples, the current collector may be a metal. The metal of the current collector may be selected from at least one of the following: Gold Au; Nickel Ni; Cooper Cu; Platinum Pt; Palladium Pd; or any combination thereof.

In some of these examples, the metal collector may further comprise a first current collector and a second current collector. The first current collector may be configured to be in contact with the positive electrode 112. Therefore, the first current collector may transport a charge (e.g., an electron) from the positive electrode 112. In addition, the second current collector may be configured to be in contact with the negative electrode 114. Therefore, the second current collector may transport a charge (e.g., an electron) from the negative electrode 114.

In some examples, the current collector may comprise a thickness between 1 nm and 1 mm, specifically between 100 nm and 1 $\mu$m.

In some examples, the current collector may be deposited via conventional synthesis and deposition methods such as physical vapor deposition (PVD) e.g. cathodic arc deposition, electron-beam physical vapor deposition, close-space sublimation, pulsed laser deposition; thermal evaporation; electron-beam evaporation; sputtering, for example, diode sputtering, RF diode sputtering, triode sputtering, magnetron sputtering, reactive sputtering, or ion-beam sputtering; ion-assisted deposition; chemical vapor deposition (CVD); sol-gel coatings; or atomic layer deposition (ALD).

In some examples, the secondary cell 100 may further comprise an insulating layer. The insulating layer may be made of alumina $Al_2O_3$ and / or zirconia dioxide $ZrO_2$. Alumina $Al_2O_3$ and zirconia dioxide $ZrO_2$ may be electrical insulators (i.e., conductivity $\sigma$ below $10^{-4}$ S/m).

In these examples, zirconia dioxide $ZrO_2$ is not doped. Therefore, zirconia dioxide $ZrO_2$ may not exhibit ionic conductivity and may not conduct oxygen ions.

Therefore, the insulating layer made of alumina $Al_2O_3$ and / or zirconia dioxide $ZrO_2$ may prevent leakage of oxygen ions from the electrodes 110 (e.g., the positive electrode 112, the negative electrode 114) because alumina $Al_2O_3$ and / or zirconia dioxide $ZrO_2$ may not conduct oxygen ions. As a result, self-discharge of the secondary cell 100 through solid-gas reactions may be prevented.

In addition, the insulating layer may be arranged on at least one of the electrodes 110 (e.g., the positive electrode 112, the negative electrode 114, or the current collector). It may be noted that the insulating layer may be arranged either on the positive electrode 112 or the negative electrode or the current collector. In some of these examples, the insulating layer is arranged on the positive electrode 112.

In some examples, the insulating layer or the electronically insulating layer may be arranged on each electrode. Consequently, both electrodes (e.g., the positive electrode 112, the negative electrode 114, the current collector) may be in contact with an insulating layer.

In some examples, the insulating layer may comprise a thickness between 1 nm and 1 mm.

In some examples, the insulating layer may be deposited via conventional synthesis and deposition methods such as physical vapor deposition (PVD) e.g. cathodic arc deposition, electron-beam physical vapor deposition, close-space sublimation, pulsed laser deposition; thermal evaporation; electron-beam evaporation; sputtering, for example, diode sputtering, RF diode sputtering, triode sputtering, magnetron sputtering, reactive sputtering, or ion-beam sputtering; ion-assisted deposition; chemical vapor deposition (CVD); sol-gel coatings; or atomic layer deposition (ALD).

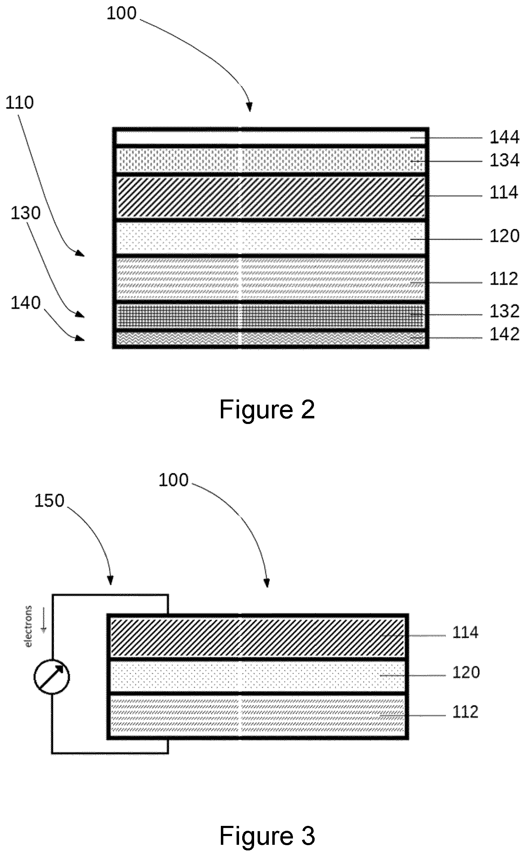

Figure 2 illustrates one example of the secondary cell 100. In Figure 2, the secondary cell 100 comprises the positive electrode 112, the negative electrode 114, the solid electrolyte 120, a current collector 130, and an insulating layer 140. These elements may be according to any of the examples herein disclosed. For example, these elements may correspond to the description referring to Figure 1.

In Figure 2, the positive electrode 112 may be configured to be in contact with the solid electrolyte. The negative electrode 114 may be configured to be in contact with the solid electrolyte 120.

In addition, in Figure 2, the current collector 130 further comprises a first current collector 132 configured to be in contact with the positive electrode 112, and a second current collector 134 configured to be in contact with the negative electrode 114. Therefore, the first current collector 132 may collect a charge (e.g., an electron) from the positive electrode 112. Similarly, the second current collector 134 may collect a charge (e.g., an electron) from the negative electrode 114.

Furthermore, in Figure 2, the insulating layer 140 is configured to be in contact with the current collector 130.

In Figure 2, the insulating layer 140 further comprises a first insulating layer 142, and a second insulating layer 144. Particularly, the first insulating layer 142 is configured to be in contact with the first current collector 132. In addition, the second insulating layer 144 is configured to be in contact with the second current collector 134.

Figure 3 illustrates the operation of a secondary cell during discharge according to one example of the present disclosure. In Figure 3, the secondary cell 100 comprises the positive electrode 112, the negative electrode 114, and the solid electrolyte 120. These elements may be according to any of the examples herein disclosed. For example, these elements may correspond to the description referring to Figure 1.

As aforementioned in the description referring to Figure 1 and / or Figure 2, the $ABO_3$ structure; the $A_{n+1}B_nO_{3n+1}$ structure; the $A_2BO_4$ structure; and the $CeMO_2$ structure may comprise oxygen vacancies. Therefore, the $ABO_3$ structure; the $A_{n+1}B_nO_{3n+1}$ structure, the $A_2BO_4$ structure; and the $CeMO_2$ structure may provide ionic conduction for conducting oxygen ions. Particularly, oxygen ions may be inserted and / or extracted from the electrodes 110 (e.g., the positive electrode 112, the negative electrode 114).

In addition, the $ABO_3$ structure; the $A_{n+1}B_nO_{3n+1}$ structure; the $A_2BO_4$ structure; and the $CeMO_2$ structure may further provide electronic conduction for conducting a charge (e.g., an electron).

In Figure 3, the positive electrode 112 and the negative electrode 114 are connected via an external circuit 150 (e.g., an electrical device and connectors to connect the electrical device with the secondary cell 100). Therefore, the secondary cell is discharging. As a result, the oxygen ions may be extracted from the positive electrode 112. The solid electrolyte 120 configured to be in contact with the positive electrode 112 may conduct the extracted oxygen ions from the positive electrode 112 to the negative electrode 114. Therefore, the extracted oxygen ions may be inserted into the negative electrode 114. In addition, a charge (e.g., an electron) may be conducted from the negative electrode 114 to the positive electrode 112 via the external circuit 150.

Oxygen ion conduction may be a result of thermally activated hopping of the oxygen ions, moving from crystal lattice site to crystal lattice site of the $ABO_3$ structure; or moving from crystal lattice site to crystal lattice site of the $A_{n+1}B_nO_{3n+1}$ structure; or moving from crystal lattice site to crystal lattice site of the $A_2BO_4$ structure; or moving from crystal lattice site to crystal lattice site of the $CeMO_2$ structure.

Selecting the solid electrolyte 120 to conduct oxygen ions and the $ABO_3$ structure and / or the $CeMO_2$ structure as electrodes 110 may achieve an operating temperature below 400°C, specifically between room temperature and 400°C, and more specifically between 150°C and 300°C.

Similarly, selecting the solid electrolyte 120 to conduct oxygen ions and the $ABO_3$ structure; and / or the $CeMO_2$ structure, and / or the $A_{n+1}B_nO_{3n+1}$ structure as electrodes 110 may achieve an operating temperature below 400°C, specifically between room temperature and 400°C, and more specifically between 150°C and 300°C.

In some examples, the operating temperature of the secondary cell 100 may be between 150°C and 400°C. Particularly, in cases where the solid electrolyte 120 may comprise a thickness above 10μm, the operating temperature may be between 150°C and 400°C.

Conduction of oxygen ions and charges (e.g., an electron) may involve redox electrochemical reactions. The redox couples of the electrodes 110 may define the voltage of the secondary cell 100.

During discharge, the negative electrode 114 may be oxidized during the electrochemical reaction. In addition, the negative electrode 114 may provide a charge (e.g., an electron) to the external circuit 150. Furthermore, the oxygen stoichiometry of the $ABO_3$ structure and / or the $CeMO_2$ structure may be modified. Similarly, the oxygen stoichiometry of the $A_{n+1}B_nO_{3n+1}$ structure may be modified. For example, the oxygen stoichiometry of the $A_2BO_4$ structure may be modified.

During discharge, the positive electrode 112 may be reduced during the electrochemical reaction. In addition, the external circuit 150 may provide a charge (e.g., an electron) to the positive electrode 112. Furthermore, the oxygen stoichiometry of the $ABO_3$ structure and / or the $CeMO_2$ structure may be modified.

On the contrary, under an external electric field (i.e., the secondary cell 100 is charging), oxygen ions may be extracted from the negative electrode 114. The solid electrolyte 120 configured to be in contact with the negative electrode 114 may conduct the extracted oxygen ions from the negative electrode 114 to the positive electrode 112. Therefore, the extracted oxygen ions may be inserted into the positive electrode 112.

For example, for the $ABO_3$ structure, the reaction may be the following:

$$(\text{La, Sr})B_x^{+3}B_{1-x}^{+4}O_{3-\delta} + nO^{2-} \leftrightarrow (\text{La, Sr})B_{x-2n}^{+3}B_{1-x+2n}^{+4}O_{3-\delta+n} + 2\,e^-$$

In this example, the A site comprises Lanthanum La and Strontium Sr.

In some examples, the B site may comprise iron Fe. Therefore, electrochemical oxidation and reduction ($Fe^{3+}/Fe^{4+}$) may reversibly take place during the extraction and / or the insertion of oxygen ions.

In these examples, depending on the oxygen stoichiometry of the $ABO_3$ structure, the redox couples involved in the electrochemical reactions may be $Fe^{3+}/Fe^{4+}$ couple and / or $Fe^{3+}/Fe^{2+}$ couple.

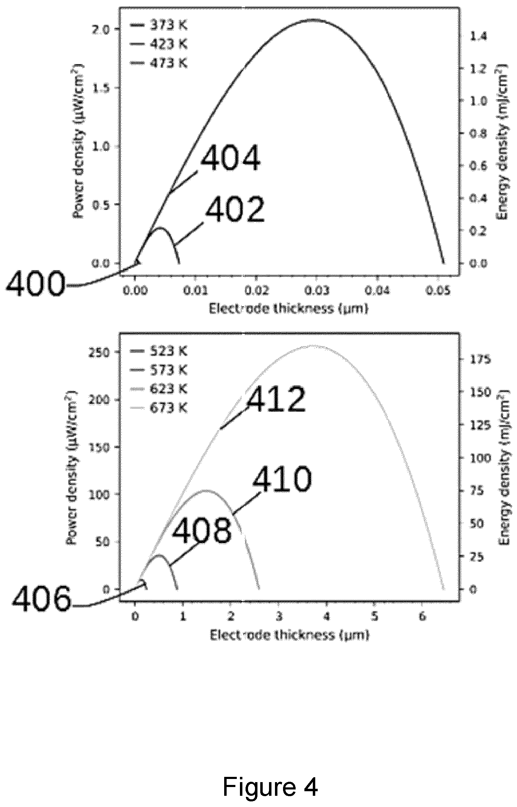

Figures 4 illustrates a plurality of curves of a secondary cell 100 at temperatures between 373 K and 673 K as a function of power density, energy density, and electrode thickness according to one example of the present disclosure.

Figure 4 represents a plurality of curves of a secondary cell 100 charging at a 5C-rate depending on temperature. In Figure 4, x-axis corresponds to an electrode thickness (in $\mu$m), and *y*-axis corresponds to a power density ($\mu$W/cm$^2$) or to an energy density (mJ/cm$^2$).

In Figure 4, the plurality of curves raises from an initial power density (0 $\mu$W/cm$^2$) or an initial energy density (0 J/cm$^2$) to a (relative) maximum power density or to a (relative) maximum energy density. Subsequently, the plurality of curves decreases from the (relative) maximum power density or the (relative) maximum energy density to the initial power density (0 $\mu$W/cm$^2$) or the initial energy density (0 mJ/cm$^2$). It is noted that the power density numerical value or the energy density numerical value is dependent on the temperature and on the electrode thickness of the secondary cell 100.

Particularly, in Figure 4, the secondary cell 100 comprises a $LaSrCrO_3$ (LSCr) positive electrode, a cerium oxide-samarium doped (SDS) solid electrolyte, and a $LaSrFeO_3$ (LSF) negative electrode. These elements may be according to any of the examples herein disclosed. For example, these elements may correspond to the description referring to Figure 1. In this example, the cerium oxide-samarium doped (SDS) solid electrolyte comprises a thickness of 100 nm.

In Figure 4, the curve 400 represents the curve of the secondary cell 100 at a temperature of 373 K (i.e., 100°C). Particularly, the (relative) maximum power density is about 0.035 $\mu$W/cm$^2$ and the (relative) maximum energy density is about 0.02 mJ/cm$^2$. At the (relative) maximum power density and / or the (relative) maximum energy density, the electrode thickness is 0.0002 $\mu$m.

In Figure 4, curve 402 represents the curve of the secondary cell 100 at a temperature of 423 K (i.e., 150°C). Particularly, the (relative) maximum power density is about 0.3 $\mu$W/cm$^2$ and the (relative) maximum energy density is about 0.2 mJ/cm$^2$. At the (relative) maximum power density and / or the (relative) maximum energy density, the electrode thickness is 0.004 $\mu$m.

In Figure 4, curve 404 represents the curve of the secondary cell 100 at a temperature of 473 K (i.e., 200°C). Particularly, the (relative) maximum power density is about 2.1 $\mu$W/cm$^2$ and the (relative) maximum energy density is about 1.5 mJ/cm$^2$. At the (relative) maximum power density and / or the (relative) maximum energy density, the electrode thickness is 0.03 $\mu$m.

In Figure 4, curve 406 represents the curve of the secondary cell 100 at a temperature of 523 K (i.e., 250°C). Particularly, the (relative) maximum power density is about 9.1 $\mu$W/cm$^2$ and the (relative) maximum energy density is about 6.9 mJ/cm$^2$. At the (relative) maximum power density and / or the (relative) maximum energy density, the electrode thickness is 0.14 $\mu$m.

In Figure 4, curve 408 represents the curve of the secondary cell 100 at a temperature of 573 K (i.e., 300°C). Particularly, the (relative) maximum power density is about 35.1 $\mu$W/cm$^2$ and the (relative) maximum energy density is about 25.1 mJ/cm$^2$. At the (relative) maximum power density and / or the (relative) maximum energy density, the electrode thickness is 0.51 $\mu$m.

In Figure 4, curve 410 represents the curve of the secondary cell 100 at a temperature of 623 K (i.e., 350°C). Particularly, the (relative) maximum power density is about 103.4 $\mu W/cm^2$ and the (relative) maximum energy density is about 75.1 $mJ/cm^2$. At the (relative) maximum power density and / or the (relative) maximum energy density, the electrode thickness is 1.5 $\mu m$.

In Figure 4, curve 412 represents the curve of the secondary cell 100 at a temperature of 673 K (i.e., 400°C). Particularly, the (relative) maximum power density is about 255.7 $\mu W/cm^2$ and the (relative) maximum energy density is about 184.8 $mJ/cm^2$. At the (relative) maximum power density and / or the (relative) maximum energy density, the electrode thickness is 3.75 $\mu m$.

In summary, Figure 4 shows that the power density numerical value or the energy density numerical value is dependent on the temperature and on the electrode thickness (e.g., electrode thickness of the positive electrode and / or electrode thickness of the negative electrode) of the secondary cell 100.

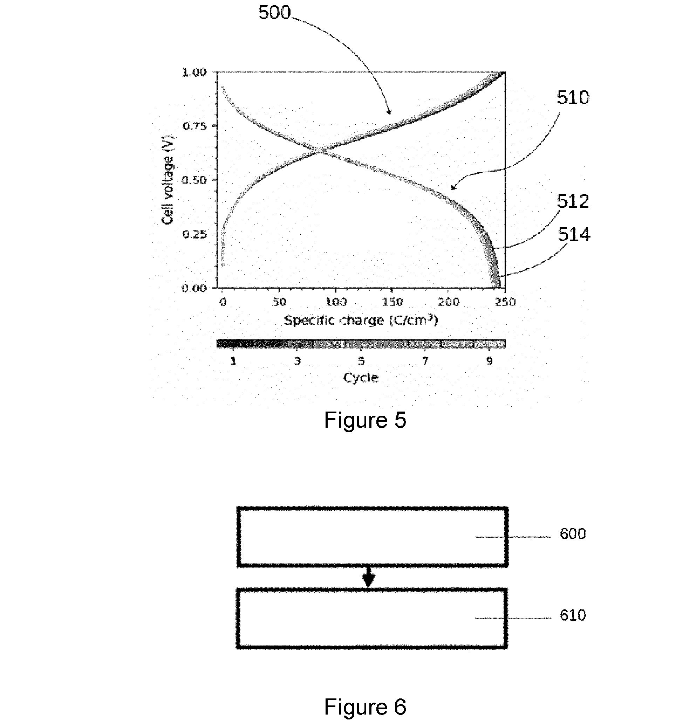

Figure 5 illustrates a plurality of charging curves 500 and a plurality of discharging curves 510 of a secondary cell 100 according to one example of the present disclosure. In Figure 5, the secondary cell 100 comprises a $La_{0.5}Sr_{0.5}Cr_{0.2}Mn_{0.8}O_3$ (LSCrMn) positive electrode, a Y-doped $ZrO_2$ solid electrolyte, and a $La_{0.6}Sr_{0.4}FeO_3$ (LSF) negative electrode. These elements may be according to any of the examples herein disclosed. For example, these elements may correspond to the description referring to Figure 1. In this example, the Y-doped $ZrO_2$ solid electrolyte is $ZrO_2$ doped with 9.5 mol% of $Y_2O_3$. In addition, the Y-doped $ZrO_2$ comprises a thickness of 0.5 mm. Furthermore, the $La_{0.5}Sr_{0.5}Cr_{0.2}Mn_{0.8}O_3$ (LSCrMn) positive electrode comprises a thickness of 240 nm, and the $La_{0.6}Sr_{0.4}FeO_3$ (LSF) negative electrode comprises a thickness of 400 nm. The plurality of charging curves 500 and the plurality of discharging curves 510 of the secondary cell 100 provided in this example have been measured at 350°C in a 0.25 mbar oxygen partial pressure at a 1.5 C-rate (i.e., 5 $\mu A$ in this example).

In Figure 5, the plurality of charging curves 500 and the plurality of discharging curves 510 are illustrated as a function of cell voltage (V) and as a function of specific charge ($C/cm^3$).

In Figure 5, x-axis corresponds to specific charge ($C/cm^3$), and y-axis corresponds to a cell voltage (V).

It may be noted that the cell voltage is about 0.8V in Figure 5. In addition, a specific charge of a first cycle discharging curve 512 is about 245 $C/cm^3$. Furthermore, a specific charge of a ninth cycle discharging curve 514 is about 240 $C/cm^3$. As a result, there is a difference about 2% between the specific charge of a ninth cycle discharging curve 514 and the specific charge of a first cycle discharging curve 512. Therefore, a secondary cell 100 with improved cyclability may be obtained.

It may be noted that similar results may be observed for the plurality off charging curves 500.

Figure 6 illustrates a flow chart of a method for forming a secondary cell 100.

At block 600, a solid electrolyte according to any of the examples herein disclosed is deposited via conventional synthesis and deposition methods (e.g., thin-film deposition methods).

At block 610, a positive electrode and / or a negative electrode are formed onto the solid electrolyte. The positive electrode and / or the negative electrode may be according to any of the examples herein disclosed. The positive electrode and the negative electrode are an $ABO_3$ structure, wherein the A site corresponds to a first chemical element with a first covalent radius, wherein the B site corresponds to a second chemical element with a second covalent radius; and / or a $CeMO_2$ structure, wherein the Ce is Cerium, M is a metal.

In some examples, the method for forming a secondary cell 100 may further comprise depositing a current collector onto the positive electrode and / or the negative electrode.

In some examples, the method for forming a secondary cell 100 may further comprise depositing an insulating layer arranged on at least one of the electrodes.

In these examples, depositing the insulating layer may comprise depositing the insulating layer onto the positive electrode and / or the negative electrode.

In some of these examples, depositing the insulating layer may comprise depositing the insulating layer onto the current collector.

**Claims**

1. A secondary cell comprising:

   a solid electrolyte to conduct oxygen ions,
   a positive electrode configured to be in contact with the solid electrolyte;
   a negative electrode configured to be in contact with the solid electrolyte;
   wherein the positive electrode and the negative electrode comprise a mixed ionic and electronic structure for conducting oxygen ions and electrons;
   wherein the mixed ionic and electronic structure comprises:

an $ABO_3$ structure, wherein the A site corresponds to a first chemical element with a first covalent radius, wherein the B site corresponds to a second chemical element with a second covalent radius; and / or

a $CeMO_2$ structure, wherein the Ce is Cerium and M is a metal;

**characterized in that** the secondary cell comprises an insulating layer configured to avoid oxygen leaks, the insulating layer being arranged on the positive electrode.

2. The secondary cell according to claim 1, wherein the first covalent radius of the first chemical element is greater than the second covalent radius of the second chemical element.

3. The secondary cell according to any of claims 1 to 2, wherein the first chemical element is selected from at least one of the following: Lanthanum La, Calcium Ca, Strontium Sr, Barium Ba and/or the second chemical element is selected from at least one of the following: Manganese Mn, Chromium Cr, Iron Fe, Nickel Ni, Cobalt Co, Titanium Ti.

4. The secondary cell according to any of claims 1 to 3, wherein the stoichiometry of the $ABO_3$ structure is $ABO_{3-\delta}$, wherein $\delta$ is between -1 and 1.

5. The secondary cell according to any of claims 1 to 4, wherein M of the $CeMO_2$ structure is selected from at least one of the following: Gadolinium Gd, Samarium Sm, Lanthanum La, Calcium Ca, Magnesium Mg, Praseodymium Pr, Zirconium Zr.

6. The secondary cell according to any of claims 1 to 5, wherein the stoichiometry of the $CeMO_2$ structure is $Ce_{1-x}M_xO_{2-\delta}$, wherein x is between 0 and 1, and $\delta$ is between -1 and 1.

7. The secondary cell according to any of claims 1 to 6, wherein the solid electrolyte to conduct oxygen ions comprises doped $ZrO_2$ or doped $CeO_2$.

8. The secondary cell according to claim 7, wherein the doped $ZrO_2$ and / or the doped $CeO_2$ comprise a dopant selected from at least one of the following: Gadolinium Gd, Samarium Sm, Scandium Sc, Lanthanum La, Calcium Ca, Magnesium Mg, Yttrium Y.

9. The secondary cell according to any of claims 1 to 8, wherein the solid electrolyte comprises a thickness between 1 nm and 1 mm, specifically between 100 nm and 1 pm.

10. The secondary cell according to any of claims 1 to 9, further comprising a current collector, wherein the current collector is configured to be in contact with:

the positive electrode for collecting a charge from the positive electrode; or
the negative electrode for collecting a charge from the negative electrode.

11. The secondary cell according to claim 10, wherein the current collector comprises:

a first current collector configured to be in contact with the positive electrode,
a second current collector configured to be in contact with the negative electrode.

12. The secondary cell according to any of claims 1 to 11, wherein the insulating layer is made of zirconia dioxide $ZrO_2$ or alumina $Al_2O_3$.

13. The secondary cell according to claim 12 when depending on claims 10 or 11, wherein the insulating layer is configured to be in contact with the current collector.

14. The secondary cell according to any of claims 1 to 13, wherein the insulating layer comprises a thickness between 1 nm and 1 mm.

15. The secondary cell according to any of claims 1 to 14, wherein the insulating layer is an electronically insulating layer.

**Patentansprüche**

1. Sekundärzelle, umfassend:

 einen Festelektrolyten zum Leiten von Sauerstoffionen,
 eine positive Elektrode, die so konfiguriert ist, dass sie mit dem Festelektrolyten in Kontakt steht,
 eine negative Elektrode, die so konfiguriert ist, dass sie mit dem Festelektrolyten in Kontakt steht,
 wobei die positive Elektrode und die negative Elektrode eine ionische und
 elektronische Mischstruktur zum Leiten von Sauerstoffionen und Elektronen aufweisen,
 wobei die ionische und elektronische Mischstruktur Folgendes aufweist:

 eine $ABO_3$-Struktur, wobei die A-Stelle einem ersten chemischen Element mit einem ersten kovalenten Radius entspricht, wobei die B-Stelle einem zweiten chemischen Element mit einem zweiten kovalenten Radius entspricht,
 und/oder
 eine $CeMO_2$-Struktur, wobei Ce für Cer und M für ein Metall steht,

 **dadurch gekennzeichnet, dass** die Sekundärzelle eine Isolierschicht aufweist, die so konfiguriert ist, dass sie Sauerstofflecks verhindert, wobei die Isolierschicht auf der positiven Elektrode angeordnet ist.

2. Sekundärzelle gemäß Anspruch 1, wobei der erste kovalente Radius des ersten chemischen Elements größer als der zweite kovalente Radius des zweiten chemischen Elements ist.

3. Sekundärzelle gemäß einem der Ansprüche 1 bis 2, wobei das erste chemische Element ausgewählt ist aus mindestens einem von Folgenden: Lanthan La, Calcium Ca, Strontium Sr, Barium Ba, und/oder das zweite chemische Element ausgewählt ist aus mindestens einem von Folgenden: Mangan Mn, Chrom Cr, Eisen Fe, Nickel Ni, Kobalt Co, Titan Ti.

4. Sekundärzelle gemäß einem der Ansprüche 1 bis 3, wobei die Stöchiometrie der $ABO_3$-Struktur $ABO_{3-\delta}$ ist, wobei $\delta$ zwischen -1 und 1 liegt.

5. Sekundärzelle gemäß einem der Ansprüche 1 bis 4, wobei M der $CeMO_2$-Struktur ausgewählt ist aus mindestens einem von Folgenden: Gadolinium Gd, Samarium Sm, Lanthan La, Calcium Ca, Magnesium Mg, Praseodym Pr, Zirkonium Zr.

6. Sekundärzelle gemäß einem der Ansprüche 1 bis 5, wobei die Stöchiometrie der $CeMO_2$-Struktur $Ce_{1-x}M_xO_{2-\delta}$ ist, wobei x zwischen 0 und 1 liegt und $\delta$ zwischen -1 und 1 liegt.

7. Sekundärzelle gemäß einem der Ansprüche 1 bis 6, wobei der Festelektrolyt zum Leiten von Sauerstoffionen dotiertes $ZrO_2$ oder dotiertes $CeO_2$ umfasst.

8. Sekundärzelle gemäß Anspruch 7, wobei das dotierte $ZrO_2$ und/oder das dotierte $CeO_2$ einen Dotierstoff umfassen/umfasst, der ausgewählt ist aus mindestens einem von Folgenden: Gadolinium Gd, Samarium Sm, Scandium Sc, Lanthan La, Calcium Ca, Magnesium Mg, Yttrium Y.

9. Sekundärzelle gemäß einem der Ansprüche 1 bis 8, wobei der Festelektrolyt eine Dicke zwischen 1 nm und 1 mm, insbesondere zwischen 100 nm und 1 pm, aufweist.

10. Sekundärzelle gemäß einem der Ansprüche 1 bis 9, ferner umfassend einen Stromabnehmer, wobei der Stromabnehmer so konfiguriert ist, dass er mit Folgendem in Kontakt steht:

 der positiven Elektrode zum Aufnehmen einer Ladung von der positiven Elektrode; oder
 der negativen Elektrode zum Aufnehmen einer Ladung von der negativen Elektrode.

11. Sekundärzelle gemäß Anspruch 10, wobei der Stromabnehmer Folgendes umfasst:

 einen ersten Stromabnehmer, der so konfiguriert ist, dass er mit der positiven Elektrode in Kontakt steht,
 einen zweiten Stromabnehmer, der so konfiguriert ist, dass er mit der negativen Elektrode in Kontakt steht.

**12.** Sekundärzelle gemäß einem der Ansprüche 1 bis 11, wobei die Isolierschicht aus Zirkoniumdioxid $ZrO_2$ oder Aluminiumoxid $Al_2O_3$ gefertigt ist.

**13.** Sekundärzelle gemäß Anspruch 12, wenn abhängig von Anspruch 10 oder 11, wobei die Isolierschicht so konfiguriert ist, dass sie mit dem Stromabnehmer in Kontakt steht.

**14.** Sekundärzelle gemäß einem der Ansprüche 1 bis 13, wobei die Isolierschicht eine Dicke zwischen 1 nm und 1 mm aufweist.

**15.** Sekundärzelle gemäß einem der Ansprüche 1 bis 14, wobei die Isolierschicht eine elektronisch isolierende Schicht ist.

**Revendications**

**1.** Cellule secondaire comprenant:

un électrolyte solide pour conduire des ions oxygène;
une électrode positive configurée pour être en contact avec l'électrolyte solide;
une électrode négative configurée pour être en contact avec l'électrolyte solide;
l'électrode positive et l'électrode négative comportant une structure mixte ionique et électronique pour conduire des ions oxygène et des électrons;
la structure mixte ionique et électronique comportant:

une structure $ABO_3$ dans laquelle le site A correspond à un premier élément chimique ayant un premier rayon covalent, le site B correspondant à un deuxième élément chimique ayant un deuxième rayon covalent; et/ou
une structure $CeMO_2$ dans laquelle Ce représente le cérium et M représente un métal;

**caractérisée en ce que** la cellule secondaire comprend une couche isolante configurée pour éviter les fuites d'oxygène, la couche isolante étant disposée sur l'électrode positive.

**2.** Cellule secondaire selon la revendication 1, dans laquelle le premier rayon covalent du premier élément chimique est supérieur au deuxième rayon covalent du deuxième élément chimique.

**3.** Cellule secondaire selon l'une des revendications 1 à 2, dans laquelle le premier élément chimique est choisi parmi au moins un des suivants: lanthane La, calcium Ca, strontium Sr, baryum Ba, et/ou le deuxième élément chimique est choisi parmi au moins un des suivants: manganèse Mn, chrome Cr, fer Fe, nickel Ni, cobalt Co, titane Ti.

**4.** Cellule secondaire selon l'une des revendications 1 à 3, dans laquelle la stœchiométrie de la structure $ABO_3$ est $ABO_{3-\delta}$, dans laquelle $\delta$ est compris entre -1 et 1.

**5.** Cellule secondaire selon l'une des revendications 1 à 4, dans laquelle M de la structure $CeMO_2$ est choisi parmi au moins un des suivants: gadolinium Gd, samarium Sm, lanthane La, calcium Ca, magnésium Mg, praséodyme Pr, zirconium Zr.

**6.** Cellule secondaire selon l'une des revendications 1 à 5, dans laquelle la stœchiométrie de la structure $CeMO_2$ est $Ce_{1-x}M_xO_{2-\delta}$, dans laquelle x est compris entre 0 et 1 et $\delta$ est compris entre -1 et 1.

**7.** Cellule secondaire selon l'une des revendications 1 à 6, dans laquelle l'électrolyte solide pour conduire des ions oxygène comprend du $ZrO_2$ dopé ou du $CeO_2$ dopé.

**8.** Cellule secondaire selon la revendication 7, dans laquelle le $ZrO_2$ dopé et/ou le $CeO_2$ dopé comprennent/comprend un dopant choisi parmi au moins un des suivants: gadolinium Gd, samarium Sm, scandium Sc, lanthane La, calcium Ca, magnésium Mg, yttrium Y.

**9.** Cellule secondaire selon l'une des revendications 1 à 8, dans laquelle l'électrolyte solide présente une épaisseur comprise entre 1 nm et 1 mm, en particulier comprise entre 100 nm et 1 pm.

10. Cellule secondaire selon l'une des revendications 1 à 9, comprenant en outre un collecteur de courant, le collecteur de courant étant configuré pour être en contact avec:

   l'électrode positive pour collecter une charge provenant de l'électrode positive; ou
   l'électrode négative pour collecter une charge provenant de l'électrode négative.

11. Cellule secondaire selon la revendication 10, dans laquelle le collecteur de courant comprend:

   un premier collecteur de courant configuré pour être en contact avec l'électrode positive,
   un deuxième collecteur de courant configuré pour être en contact avec l'électrode négative.

12. Cellule secondaire selon l'une des revendications 1 à 11, dans laquelle la couche isolante est constituée de dioxyde de zirconium $ZrO_2$ ou d'alumine $Al_2O_3$.

13. Cellule secondaire selon la revendication 12, lorsqu'elle dépend de la revendication 10 ou 11, dans laquelle la couche isolante est configurée pour être en contact avec le collecteur de courant.

14. Cellule secondaire selon l'une des revendications 1 à 13, dans laquelle la couche isolante présente une épaisseur comprise entre 1 nm et 1 mm.

15. Cellule secondaire selon l'une des revendications 1 à 14, dans laquelle la couche isolante est une couche électroniquement isolante.

Figure 1

Figure 2

Figure 3

Figure 4

Figure 5

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22382423
- WO 2013093044 A1
- US 2020227779 A1
- US 2005089738 A1

**Non-patent literature cited in the description**

- **CORDERO, B.** Covalent radii revisited. radii revisited. *Dalton Trans*, 2008, 2832-2838